# EUROPÄISCHE PATENTANMELDUNG

(11) **EP 1 106 267 A2**
(43) Veröffentlichungstag der Anmeldung: **13.06.2001**
(21) Anmeldenummer: 00126931.5
(22) Anmeldetag: 08.12.2000
(51) Int. Cl.: B07C 5/38

(54) **Verfahren zum Behandeln von zu kommissionierenden Artikeln, insbesondere von Softgood-Artikeln**

(30) Priorität: 11.12.1999 DE 19959818
(71) Anmelder: Quelle Aktiengesellschaft, 90762 Fürth (DE)
(72) Erfinder: Büschel, Steffan, 90762 Fürth (DE); Fischer, Reiner, 91126 Schwabach (DE); Häussler, Jörg, 90480 Nürnberg (DE); Neupert, Manfred, 90763 Fürth (DE)
(74) Vertreter: Blaumeier, Jörg - Patentanwalt

(57) **Zusammenfassung**

Verfahren zum Behandeln von zu kommissionierenden Artikeln, insbesondere Softgood-Artikeln, gekennzeichnet durch:
- automatisches Entnehmen eines Artikels mit einem Greifmittel einer Greifereinrichtung aus einer Artikelaufnahme, in der mehrere Artikel unterschiedlichen Typs eingestapelt sind,
- automatisches Erfassen einer Artikelkennung des Artikels,
- automatisches Übergeben des Artikels in ein Aufnahmefach eines Kommissionierautomaten mittels der Greifereinrichtung,
- automatisches Erfassen einer Fachkennung des Aufnahmefachs,
- automatisches Übertragen der Artikelkennung und der Fachkennung an eine den Betrieb des Kommissionierautomaten steuernde Steuerungseinrichtung, in welcher die Kennungen einander zugeordnet werden.

## Beschreibung

Verfahren zum Behandeln von zu kommissionierenden Artikeln, insbesondere von Softgood-Artikeln

Vor allem im Versandhandel besteht im Bereich der Retouren das Problem, dass eine Vielzahl von bestellten Artikeln dem Versandhaus zurückgeschickt werden, wobei es sich bei den meisten dieser Artikel um einer Zweitversendung zugängliche Artikel handelt, die also in den Versendefluss wieder eingebunden werden können. Solche Artikel gehen verständlicherweise wahllos, also ohne jede Ordnung ein. Um diese Artikel einer Zweitversendung wieder zugänglich zu machen werden diese ihrer Art nach erfasst, beispielsweise durch Erfassen der Bestellnummer oder dergleichen und in ein Retourenverteillager gebracht, wo sie im Bedarfsfall manuell kommissioniert werden. Dies ist sehr umständlich, personalintensiv und zeitaufwendig, ein schneller Umschlag solcher Artikel ist naturgemäß nicht möglich.

Der Erfindung liegt das Problem zugrunde, ein Verfahren zum Behandeln von Artikeln gleich welcher Art, also ob Retoure oder Normalware, anzugeben, das bei wahllosem Eingang oder ohne jede Ordnung vorliegenden Artikeln eine schnelle Behandlung mit der Möglichkeit einer eben so zügigen Kommissionierung derselben ermöglicht.

Zur Lösung dieses Problems ist ein Verfahren der eingangs genannten Art gekennzeichnet durch:
- automatisches Entnehmen eines Artikels mit einem Greifmittel einer Greifereinrichtung aus einer Artikelaufnahme, in der mehrere Artikel unterschiedlichen Typs eingestapelt sind,
- automatisches Erfassen einer Artikelkennung des Artikels,
- automatisches Übergeben des Artikels in ein Aufnahmefach eines Kommissionierautomaten mittels der Greifereinrichtung,
- automatisches Erfassen einer Fachkennung des Aufnahmefachs,
- automatisches Übertragen der Artikelkennung und der Fachkennung an eine den Betrieb des Kommissionierautomaten steuernde Steuerungseinrichtung, in welcher die Kennungen einander zugeordnet werden.

Beim erfindungsgemäßen Verfahren werden die wahllos eingehenden Artikel zunächst in beliebiger Folge in eine stapelfach- oder stapelkistenartige Artikelaufnahme eingestapelt, beispielsweise werden mehrere Bekleidungsstücke wie Hemden, T-Shirts, Blusen, Hosen, sämtliche in Folienverpackung, übereinander gestapelt. Den mehreren Artikelaufnahmen ist ein Kommissionierautomat mit mehreren Aufnahmefächern zugeordnet, wobei in jedes Aufnahmefach jeweils ein Artikel eingegeben werden kann. Hierzu ist eine Greifereinrichtung mit einem Greifmittel vorgesehen, mit welchem ein Artikel aus einem beliebigen Aufnahmefach entnommen und in das automatenseitige Aufnahmefach eingegeben wird. Während des Entnehmens bzw. Eingebens werden mit besonderem Vorteil sowohl eine Artikelkennung als auch eine Fachkennung des Aufnahmefachs erfasst und an eine den Betrieb des Kommissionierautomaten, bevorzugt aber auch den Betrieb der automatischen Greifereinrichtung steuernde Steuerungseinrichtung übertragen, wo beide einander zugeordnet werden. Aus dem Kommissionierautomaten kann dann durch Steuerung über die Steuerungseinrichtung ein bestimmter Artikel kommissioniert werden, da steuerungsseitig bekannt ist, welcher Artikel in welchem Aufnahmefach liegt. Beim erfindungsgemäßen Verfahren werden also beliebige Artikel sortenunrein lediglich in Artikelaufnahmen eingeschlichtet, alles andere bis hin zum letztendlichen Kommissionieren erfolgt automatisch einschließlich der Erfassung sämtlicher für eine Zuordnung erforderlicher Kennungen. Die Artikel können auf diese Weise sehr schnell der Kommissionierung zugeführt werden, der gesamte Ablauf erfordert kaum Personaleinsatz.

Neben dem eigentlichen auftragsbezogenen Kommissionieren dieser Artikel aus dem Kommissionierautomaten, was über die Steuerungseinrichtung gesteuert wird, welcher entsprechende Kommissionieraufträge zur Abarbeitung gegeben werden und über welche die auftragsgerechte Abgabe der Artikel aus dem Kommissionierautomaten, wo die Artikel bevorzugt automatisch auf ein vor dem Automaten fahrendes Förderband abgeworfen oder abgegeben werden, gesteuert wird, ist das erfindungsgemäße Verfahren auch beispielsweise zum Sortieren der in den Kommissionierautomaten eingebrachten Artikel von Vorteil. Automatenseitig können, je nach Anzahl der Aufnahmefächer, beliebig viele unterschiedliche Artikel eingebracht werden. Über die Steuerungseinrichtung, der sämtliche Kennungen bekannt sind, ist es nun möglich, bei Vorliegen einer großer Anzahl eines bestimmten Artikels X sämtliche dieser Artikel zu kommissionieren, um diese beispielsweise im Rahmen einer Rückverdichtung einem Lager zuzuführen.

Die Artikelkennung kann vor oder nach dem Greifen mittels eines an der Greifereinrichtung angeordneten Erfassungsmittels, das mit der Steuerungseinrichtung kommuniziert, erfasst werden. Die Kennung des Aufnahmefachs am Automaten kann ebenfalls mittels eines an der Greifereinrichtung angeordneten weiteren Erfassungsmittels, das mit der Steuerungseinrichtung kommuniziert, erfasst werden. Alternativ zu dieser Möglichkeit kann die Fachkennung auch automatisch bei Eingeben des Artikels in das Aufnahmefach, bei welchem ein fachseitig vorgesehenes Erfassungsmittel betätigt wird, das mit der Steuerungseinrichtung kommuniziert, an die Steuerungseinrichtung gegeben werden. Beispielsweise kann hierbei ein Tastschalter oder eine Lichtschranke oder dergleichen betätigt werden, die die Signalübertragung auslöst.

Als Artikelkennung kann ein am Artikel befindlicher Barcode und gegebenenfalls als Fachkennung ein am Aufnahmefach vorgesehener Barcode mittels des oder der als Barcodeleser ausgebildeten Lesemittel der Greifereinrichtung erfasst werden.

Neben dem Verfahren betrifft die Erfindung ferner eine Vorrichtung, mittels welcher das Verfahren durchführbar ist, umfassend einen Kommissionierautomaten mit mehreren über- und/oder nebeneinander angeordneten, zur Aufnahme lediglich eines Artikels ausgebildeten Aufnahmefächern, mehrere an einem Gestell vorgesehene über- und/oder nebeneinander angeordnete Aufnahme für jeweils mehrere stapelbare Artikel, insbesondere Softgood-Artikel, sowie eine zwischen dem Kommissionierautomaten und dem Gestell angeordnete, längs dieser verfahrbare automatische Greifereinrichtung mit einem Greifmittel zum Entnehmen eines einzelnen Artikels einer Aufnahme und zum Übergeben des Artikels an ein Aufnahmefach, wobei Erfassungsmittel zum Erfassen einer Artikelkennung des behandelten oder zu behandelnden Artikels und des den Artikel aufnehmenden Aufnahmefachs vorgesehen sind, die mit einer zumindest den Betrieb des Kommissionierautomaten steuernden Steuerungseinrichtung kommunizieren, in welcher die beiden Kennungen einander zugeordnet werden. Die Steuerungseinrichtung kann zweckmäßigerweise auch den Betrieb der Greifereinrichtung steuern, so dass also ein zentraler Steuerbetrieb möglich ist.

Erfindungsgemäß kann wenigstens ein Erfassungsmittel zum Erfassen der Artikelkennung an der Greifereinrichtung vorgesehen sein. Zweckmäßig ist es, wenn zwei voneinander beabstandete Erfassungsmittel vorgesehen sind, zwischen denen der aufzunehmende Artikel hindurchbewegbar ist. Werden beispielsweise Softgood-Artikel in Form folieneingeschweißter Hemden, T-Shirts etc. behandelt, so ermöglicht diese Erfindungsausgestaltung die sichere Erfassung einer Artikelkennung, beispielsweise in Form einer auf einer Seite befindlichen Bestellnummer oder eines Barcodes, da die Erfassungsmittel, beispielsweise Barcodeleser, den Artikel sowohl ober- als auch unterseitig abtasten, so dass die Kennung, gleich wo sie sich befindet, auf jeden Fall erfasst wird.

Erfindungsgemäß kann wenigstens ein weiteres Erfassungsmittel zum Erfassen der Fachkennung an der Greifereinrichtung vorgesehen sein. Alternativ hierzu kann fachseitig wenigstens ein Erfassungsmittel vorgesehen sein, welches automatisch durch das Eingeben des Artikels in das jeweilige Fach betätigbar ist. Bei diesem kann es sich beispielsweise um einen Tastschalter handeln, der betätigt wird, wenn der Artikel auf ihm aufliegt, auch eine Ausbildung als Lichtschranke ist denkbar, die dann betätigt wird, wenn der Artikel durch den Schrankenbereich hindurchbewegt wird. Zweckmäßig ist es, wenn die Erfassungsmittel an der Greifereinrichtung als Barcodelesemittel und die Artikelkennung und gegebenenfalls die Fachkennung, sofern diese von greifereinrichtungsseitig vorgesehenen Erfassungsmitteln aufgenommen wird, als Barcode ausgebildet sind.

Das Greifmittel selbst soll derart ausgestaltet sein, dass ein sicheres Angreifen am jeweiligen zu vereinzelnden Artikel möglich ist. Hier kommt es natürlich auf die Ausgestaltung der in der Aufnahme befindlichen Artikel selbst an. Dies können beispielsweise Softgood-Artikel in Form der bereits beschriebenen folienverpackten Bekleidungsstücke sein, denkbar sind aber auch in stabileren Umverpackungen befindliche Artikel. Nach einer vorteilhaften Ausgestaltung kann das Greifmittel ein Zwei-Backen-Greifer sein, bei dem ein, bevorzugt beide Backen bewegbar sind, so dass beispielsweise das folienverpackte T-Shirt gegriffen werden kann. Ein solcher Greifer ist auch zum Packen und Herausheben von umverpackten Gegenständen verwendbar. Eine Alternative stellt ein Greifmittel in Form einer mit einem Sauggebläse gekoppelte Saugeinrichtung dar, die am Artikel angreift und diesen ansaugt. Auch dieses Greifmittel kann zur Behandlung von Softgood- wie auch Hardgood-Artikeln verwendet werden. Besonders zweckmäßig ist ein kombiniertes Greifmittel bestehend aus einem Greifer der genannten Art sowie einer Saugeinrichtung.

Um den in der Aufnahme befindlichen Artikel sicher greifen zu können ist es zweckmäßig, wenn das Greifmittel diesen nicht nur am Rand packt, sondern bevorzugt in einem mittleren Bereich angreift. Um das Greifmittel dort hinzubringen hat es sich als vorteilhaft erwiesen, wenn die Greifereinrichtung einen das Greifmittel tragenden Teleskoparm umfasst, welcher derart teleskopierbar ist, dass das Greifmittel in die Aufnahme über den obersten Artikel geschoben werden kann, wonach das Greifmittel beispielsweise abgesenkt wird und den Artikel greift. Besonders zweckmäßig ist, wenn der Teleskoparm auch in Richtung zum Aufnahmefach hin teleskopierbar ist, damit der Artikel zum Aufnahmefach hin transportiert und in dieses eingebracht werden kann. Dabei hat es sich als vorteilhaft erwiesen, wenn die Greifereinrichtung wenigstens eine Ablage umfasst, auf welcher der mittels des Greifers entnommene Artikel ablegbar ist. Diese Ablage ist insbesondere betreffend den Einbringvorgang eines Softgood-Artikels in das Aufnahmefach von Vorteil, da der ansonsten biegeschlaffe Artikel ebenflächig aufliegt und von der Ablage in das Aufnahmefach geschoben werden kann. Die Ablage kann dabei tablettartig ausgebildet sein und zwischen einer Stellung nahe der Aufnahme zum Aufnehmen eines Artikels und einer Stellung nahe einem Aufnahmefach zum Übergeben des Artikels bewegbar sein. In der aufnahmefachnahen Stellung kann die Ablage ferner abkippbar sein, so dass der Artikel von selbst in das Aufnahmefach hineinrutscht. Alternativ zu dieser bewegbaren bzw. abkippbaren Ausgestaltung kann die Ablage sich auch zwischen der Reihe der Aufnahmen und der Reihe der Aufnahmefächer am Automaten erstrecken und der gegriffene Artikel mit dem teleskopierbaren Greifmittel über die Ablage gezogen werden und in das Aufnahmefach eingeschoben werden. Eine dritte Alternative sieht vor, dass die Ablage eine Fördereinrichtung zum Fördern des Artikels aufweist, so dass dieser selbständig auf der Ablage bewegt werden kann. Zweckmäßig ist hier ein einfaches Förderband.

Weiterhin von Vorteil ist es, wenn die Aufnahmen und die Aufnahmefächer an einem gemeinsamen Gestell gehaltert sind, welches obere und/oder untere Führungsstreben oder dergleichen umfasst, im Bereich welcher die Greifereinrichtung verfahrbar gehaltert ist. Natürlich ist es auch möglich, die Aufnahmen und die Aufnahmefächer an separaten Gestellen haltern zu können. Ferner kann der Kommissioierautomat zwei einander gegenüberstehende Reihen mit Aufnahmefächern aufweisen, zwischen denen eine im Wesentlichen horizontal laufende Fördereinrichtung angeordnet ist, auf welche die am Kommissionierautomaten zu kommissionierenden Artikel abgebbar sind, wobei jeder Reihe an Aufnahmefächern eine Reihe an Aufnahmen und wenigstens eine Greifereinrichtung zugeordnet ist.

In weiterer Erfindungsausgestaltung kann vorgesehen sein, dass jede Aufnahme zum Aufnehmen wenigstens zweier separater, hintereinander einlagerbarer Artikelstapel ausgebildet ist, wobei der hintere Stapel im Bedarfsfall manuell oder mittels eines automatischen Verschiebemittels in den Arbeitsbereich der Greifereinrichtung verschiebbar ist. Jede Aufnahme kann also frühzeitig mit nachzuführenden Artikeln belegt werden, die nach kompletter Entnahme des vorderen Stapels einfach nachgeschoben werden können. Eine kontinuierliche Arbeitsweise ist dadurch sichergestellt.

Weitere Vorteile, Merkmale und Einzelheiten der Erfindung ergeben sich aus dem im Folgenden beschriebenen Ausführungsbeispiel sowie anhand der Zeichnung.

In dieser ist eine Vorrichtung 1 gezeigt, umfassend einen Kommissionierautomaten 2 mit einer Vielzahl von Aufnahmefächern 3, in die jeweils ein einzelner Artikel, im gezeigten Beispiel ein relativ flacher Softgood-Artikel wie beispielsweise ein folienverpacktes Bekleidungsstück eingebracht werden kann. Gezeigt sind zwei Reihen einander gegenüberstehender Aufnahmefächer 3, die bezüglich einander geneigt angeordnet sind. Zwischen den Reihen ist eine Fördereinrichtung 4 mit einem umlaufenden Förderband 5 angeordnet, auf welche von den Aufnahmefächern 3 abzugebende Artikel aufgebracht werden. Gezeigt ist ein Artikel 6, der bereits auf dem Förderband 5 liegt. Die kommissionsgerechte Abgabe wird über eine Steuerungseinrichtung 7 gesteuert. An jedem Aufnahmefach 3 ist im Bereich zum Förderband 5 hin ein Ausgabemechanismus, z. B. eine Klappe oder dergleichen vorgesehen, welcher über die Steuerungseinrichtung 7 angesteuert werden kann und dann, wenn zu dem in dem jeweiligen Aufnahmefach 3 befindlichen Artikel ein Kommissionierauftrag vorliegt, betätigt wird, so dass der Artikel freigegeben wird und aus dem Aufnahmefach auf das Förderband 5 fallen kann. Über die Steuerungseinrichtung 7 kann jedes der Aufnahmefächer 3 angesteuert werden. Dabei ist festzuhalten, dass die Aufnahmefächer 3 sowohl über- als auch nebeneinander in langen Reihen angeordnet sind, eine zahlenmäßige Beschränkung der Aufnahmefächer 3 ist insoweit nicht gegeben.

Jeder Reihe an Aufnahmefächern 3 ist jeweils eine Reihe an Aufnahmen 8 zugeordnet. Die Aufnahmefächer 3 wie auch die Aufnahmen 8 sind an einem gemeinsamen Gestell 9 gehaltert. In die Aufnahmen 8 werden in wahlloser Folge Artikel eingeschlichtet, die in die Aufnahmefächer 3 des Kommissionierautomaten 2 einzubringen sind. Bei den Artikeln 10 kann es sich beispielsweise um im Versandhandel eingehende Softgood-Retouren handeln. Die Artikel 10 werden manuell wie sie gerade eingehen eingebracht, ohne dass in irgendeiner Weise auf den Artikeltyp oder die Artikelart geachtet werden muss. Es sollte lediglich sichergestellt werden, dass die Artikel derart bemessen sind, dass sie vernünftig übereinander gestapelt werden können. Auch die Aufnahmen 8 sind sowohl über- als auch nebeneinander angeordnet, auch hier ist keine zahlenmäßige Beschränkung gegeben. Wie gezeigt können pro Aufnahme 8 zwei Stapel eingebracht werden. Ist der vordere, hier nur gestrichelt gezeigte Artikelstapel entnommen, wird einfach der hintere Stapel nachgeschoben. Dies kann manuell erfolgen, zweckmäßig ist aber ein automatischer Transport z.B. mittels eines am Boden der Aufnahme integrierten Transportbandes oder dergleichen.

Um nun die einzelnen Artikel 10, die in den Aufnahmen 8 eingestapelt sind, in freie Aufnahmefächer 3 am Kommissionierautomaten 2 überführen zu können, ist zwischen jeweils einer Aufnahmefachreihe und einer Aufnahmenreihe eine Greifereinrichtung 11 vorgesehen, die einen an einem Vertikalarm 12 beweglich (Doppelpfeil A) angeordneten Arm 13 umfasst, an dem ein Greifmittel 14 vorgesehen ist. Der Arm 13 ist teleskopierbar ausgebildet (Doppelpfeil B), so dass das Greifmittel 14 in eine Aufnahme 8 und damit über den jeweils zu oberst liegenden Artikel 10 eingefahren wird, um den Artikel zu greifen. Das Greifmittel 14 kann dabei beispielsweise als Zwei-Backen-Greifer ausgebildet sein, bevorzugt mit zwei beweglichen Backen, die aufeinander zubewegt werden können, um den jeweils oben liegenden Artikel zu kneifen. Auch die Ausführung als Saugeinrichtung, die den zu oberst liegenden Artikel ansaugt, ist denkbar, wie auch eine Kombination beider Greifermechanismen. Um nun einen Artikel zu greifen wird wie beschrieben der Teleskoparm 13 nach entsprechender Positionierung vor der zu entleerenden Aufnahme 8 in diese eingefahren, wonach das Greifmittel 14 auf den oben liegenden Artikel abgesenkt wird und diesen greift. Der Teleskoparm 13 wird wieder zurückgefahren, wobei der gegriffene Artikel mitgenommen wird. Die Greifeinrichtung verfügt über zwei Erfassungsmittel 15, die stationär angeordnet sind und nach Positionierung vor einem Aufnahmefach nahe diesem stehen. Bei den Erfassungsmitteln 15 kann es sich beispielsweise um Barcodeleser handeln, die zur Erfassung eines am Artikel befindlichen Barcodes, welcher als Artikelkennung den spezifischen Artikel identifiziert, dienen. Die Erfassungsmittel 15 sind dabei so angeordnet, dass der vom Greifmittel 14 gegriffene Artikel zwingend zwischen diesen hindurchbewegt werden muss, wenn er an ein Aufnahmefach 3 abgegeben werden soll. Während des Hindurchbewegens wird die Artikelober- und die Artikelunterseite von den Erfassungsmitteln 15 abgetastet, so dass sichergestellt ist, dass eine Artikelkennung auf jeden Fall erfasst wird. Die Kennung wird dann an die Steuerungseinrichtung gegeben.

Die Greifereinrichtung 11 umfasst ferner eine Ablage 16, die im gezeigten Beispiel tablettartig ausgebildet ist. Auf diese wird der gegriffene Artikel abgelegt. Anschließend verfährt die Greifereinrichtung 11 zu einem beliebigen freien Aufnahmefach 3 am Kommissionierautomaten. Die Greifereinrichtung 11 ist zu diesem Zweck im oberen Bereich des Gestells 9 an entsprechenden Führungsstreben 17 verfahrbar geführt, so dass sie jedwede Position vor einer Aufnahme 8 bzw. vor einem Aufnahmefach 3 anfahren kann.

Befindet sich nun die Greifereinrichtung 11 vor dem ausgewählten Aufnahmefach, so wird die Ablage 16 von der in der Figur rechts gezeigten aufnahmenahen Stellung in die in der Figur links gezeigte aufnahmefachnahe Stellung bewegt. Dies kann beispielsweise durch eine Schwenkbewegung um die Achse des Vertikalarms 12 erfolgen, alternativ dazu kann auch eine reine horizontale geradlinige Verschiebebewegung erfolgen. In der aufnahmefachnahen Position klappt dann die tablettartige Ablage 16 ab, so dass der aufgenommene Artikel 10 in das ausgewählte Aufnahmefach 3 hereinrutschen kann. Neben der beschriebenen Ausführungsform der Ablage kann diese auch insoweit starr ausgebildet sein und sich im Wesentlichen zwischen den Aufnahmen und den Aufnahmefächern erstrecken und eine Fördereinrichtung, beispielsweise ein Förderband aufweisen, auf welchem der aufgenommene Artikel selbständig förderbar ist.

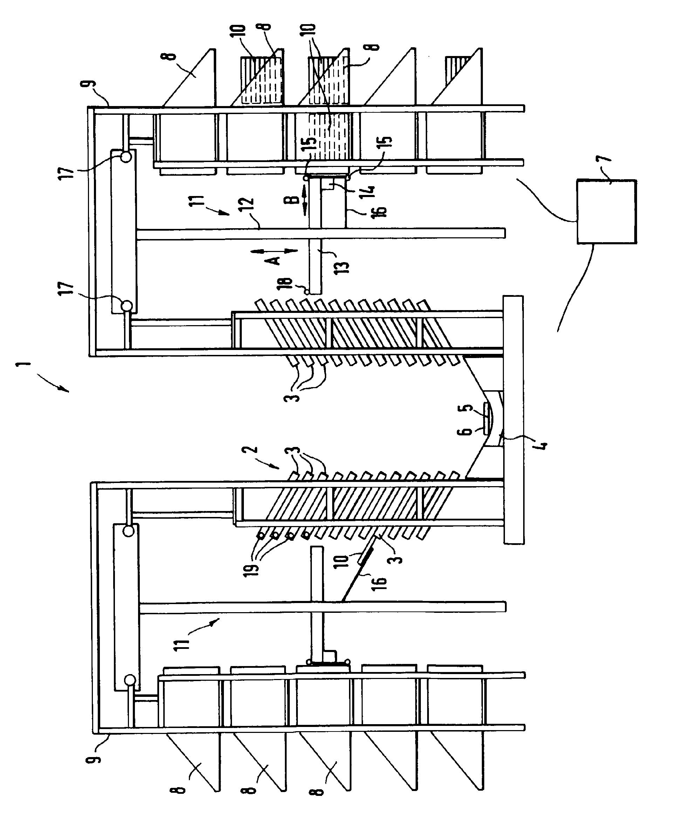

Damit die Steuerungseinrichtung 7 auftragsspezifisch die Abgabe eines bestimmten Artikels steuern kann, ist es erforderlich, neben der Kenntnis der Artikelkennung auch steuerungsseitig abzulegen, in welchem Aufnahmefach sich der spezifische Artikel sich befindet. Zu diesem Zweck kann, wie in Figur 1 rechts gezeigt ist, ein weiteres stationäres Erfassungsmittel 18 an der Greifereinrichtung 11 vorgesehen sein, welches eine entsprechende Kennung am angefahrenen Aufnahmefach 3, in das der gegriffene Artikel gegeben werden soll, erfasst und an die Steuerungseinrichtung 7 überträgt. Auch hier kann es sich um einen Barcodeleser handeln. Alternativ dazu besteht die Möglichkeit, dass aufnahmefachseitig entsprechende Erfassungsmittel 19 integriert sind, beispielsweise in Form von Tastschaltern, die dann betätigt werden, wenn ein Artikel von der Ablage 16 in das jeweilige Aufnahmefach hineinrutscht. In diesem Fall wird ebenfalls automatisch ein die Kennung des jeweiligen Aufnahmefachs darstellendes Signal an die Steuerungseinrichtung 7 gegeben.

Die Artikelkennung und die Fachkennung werden seitens der Steuerungseinrichtung 7 einander zugeordnet, so dass stets transparent ist, welcher spezifische Artikel sich in welchem spezifischen Aufnahmefach befindet. Gleichermaßen ist für die Steuerungseinrichtung 7 nach Abgabe eines Artikels auch transparent, welche Aufnahmefächer 3 frei sind, so dass die Greifereinrichtung 11 entsprechend gesteuert werden kann, um diese freien Aufnahmefächer zu befüllen.

## Patentansprüche

1. Verfahren zum Behandeln von zu kommissionierenden Artikeln, insbesondere Softgood-Artikeln, gekennzeichnet durch:
- automatisches Entnehmen eines Artikels mit einem Greifmittel einer Greifereinrichtung aus einer Artikelaufnahme, in der mehrere Artikel unterschiedlichen Typs eingestapelt sind,
- automatisches Erfassen einer Artikelkennung des Artikels,
- automatisches Übergeben des Artikels in ein Aufnahmefach eines Kommissionierautomaten mittels der Greifereinrichtung,
- automatisches Erfassen einer Fachkennung des Aufnahmefachs,
- automatisches Übertragen der Artikelkennung und der Fachkennung an eine den Betrieb des Kommissionierautomaten steuernde Steuerungseinrichtung, in welcher die Kennungen einander zugeordnet werden.

2. Verfahren nach Anspruch 1, dadurch gekennzeichnet, dass die Steuerungseinrichtung auch den Betrieb der automatischen Greifereinrichtung steuert.

3. Verfahren nach Anspruch 1 oder 2, dadurch gekennzeichnet, dass die Artikelkennung vor oder nach dem Greifen mittels eines an der Greifereinrichtung angeordneten Erfassungsmittels, das mit der Steuerungseinrichtung kommuniziert, erfasst wird.

4. Verfahren nach einem der vorangehenden Ansprüche, dadurch gekennzeichnet, dass die Fachkennung mittels eines an der Greifereinrichtung angeordneten weiteren Erfassungsmittels, das mit der Steuerungseinrichtung kommuniziert, erfasst wird.

5. Verfahren nach einem der Ansprüche 1 bis 3, dadurch gekennzeichnet, dass die Fachkennung automatisch bei Eingeben des Artikels in das Aufnahmefach, bei welchem ein fachseitig vorgesehenes Erfassungsmittel betätigt wird, das mit der Steuerungseinrichtung kommuniziert, an die Steuerungseinrichtung gegeben wird.

6. Verfahren nach einem der vorangehenden Ansprüche, dadurch gekennzeichnet, dass als Artikelkennung ein am Artikel befindlicher Barcode und gegebenenfalls als Fachkennung ein am Aufnahmefach vorgesehener Barcode mittels des oder der als Barcodeleser ausgebildeten Lesemittel der Greifereinrichtung erfasst wird bzw. werden.

7. Vorrichtung zur Durchführung des Verfahrens nach einem der vorangehenden Ansprüche, umfassend einen Kommissionierautomaten (2) mit mehreren über- und/oder nebeneinander angeordneten, zur Aufnahme lediglich eines Artikels ausgebildeten Aufnahmefächern (3), mehrere an einem Gestell (9) vorgesehene über- und/oder nebeneinander angeordnete Aufnahmen (8) für jeweils mehrere stapelbare Artikel (10), insbesondere Softgood-Artikel, sowie einer zwischen dem Kommissionierautomaten (2) und dem Gestell (9) angeordneten, längs dieser verfahrbaren automatischen Greifereinrichtung (11) mit einem Greifmittel (14) zum Entnehmen eines einzelnen Artikels (10) einer Aufnahme (8) und zum Übergeben des Artikels (10) an ein Aufnahmefach (3), wobei Erfassungsmittel (15, 18, 19) zum Erfassen einer Artikelkennung des behandelten oder zu behandelnden Artikels (10) und des den Artikel (10) aufnehmenden Aufnahmefachs (3) vorgesehen sind, die mit einer zumindest den Betrieb des Kommissionierautomaten (2) steuernden Steuerungseinrichtung (7) kommunizieren, in welcher die beiden Kennungen einander zugeordnet werden.

8. Vorrichtung nach Anspruch 7, dadurch gekennzeichnet, dass die Steuerungseinrichtung (7) auch den Betrieb der Greifereinrichtung (11) steuert.

9. Vorrichtung nach Anspruch 7 oder 8, dadurch gekennzeichnet, dass wenigstens ein Erfassungsmittel (15) zum Erfassen der Artikelkennung an der Greifereinrichtung (11) vorgesehen ist.

10. Vorrichtung nach Anspruch 9, dadurch gekennzeichnet, dass zwei voneinander beabstandete Erfassungsmittel (15) vorgesehen sind, zwischen denen der aufzunehmende Artikel hindurchbewegbar ist.

11. Vorrichtung nach einem der Ansprüche 7 bis 10, dadurch gekennzeichnet, dass wenigstens ein weiteres Erfassungsmittel (18) zum Erfassen der Fachkennung an der Greifereinrichtung (11) vorgesehen ist, oder dass fachseitig wenigstens ein Erfassungsmittel (19) vorgesehen ist, welches automatisch durch das Eingeben des Artikels (10) in das jeweilige Aufnahmefach (3) betätigbar ist.

12. Vorrichtung nach Anspruch 11, dadurch gekennzeichnet, dass das fachseitige Erfassungsmittel (19) ein vom Artikel (10) betätigbarer Tastschalter oder eine Lichtschranke ist.

13. Vorrichtung nach einem der Ansprüche 9 bis 12, dadurch gekennzeichnet, dass die Erfassungsmittel (15, 18) an der Greifereinrichtung (11) als Barcodelesemittel und die Artikelkennung und gegebenenfalls die Fachkennung als Barcode ausgebildet sind.

14. Vorrichtung nach einem der Ansprüche 7 bis 13, dadurch gekennzeichnet, dass das Greifmittel (14) ein Zwei-Backen-Greifer ist.

15. Vorrichtung nach einem der Ansprüche 7 bis 13, dadurch gekennzeichnet, dass das Greifmittel (14) eine mit einem Sauggebläse gekoppelte Saugeinrichtung ist, die am Artikel angreift und diesen ansaugt.

16. Vorrichtung nach Anspruch 14 und 15, dadurch gekennzeichnet, dass ein kombiniertes Greifmittel (14) mit einem Greifer und einer Saugeinrichtung vorgesehen sind.

17. Vorrichtung nach einem der Ansprüche 7 bis 16, dadurch gekennzeichnet, dass die Greifereinrichtung (11) einen das Greifmittel (14) tragenden Teleskoparm (13) umfasst.

18. Vorrichtung nach Anspruch 17, dadurch gekennzeichnet, dass der Teleskoparm (13) in Richtung einer Aufnahme (8) wie auch in Richtung eines Aufnahmefachs (3) hin teleskopierbar ist.

19. Vorrichtung nach einem der Ansprüche 7 bis 18, dadurch gekennzeichnet, dass die Greifereinrichtung (11) wenigstens eine Ablage (16) umfasst, auf welcher der mittels des Greifmittels (14) entnommene Artikel (10) ablegbar ist.

20. Vorrichtung nach Anspruch 19, dadurch gekennzeichnet, dass die Ablage (16) tablettartig ausgebildet ist und zwischen einer Stellung nahe einer Aufnahme (8) zum Aufnehmen eines Artikels (10) und einer Stellung nahe einem Aufnahmefach (3) zum Übergeben des Artikels (10) bewegbar ist.

21. Vorrichtung nach Anspruch 20, dadurch gekennzeichnet, dass die tablettartige Ablage (16) in der aufnahmefachnahen Stellung zum Abgeben des Artikels (10) in des Aufnahmefach (3) abkippbar ist.

22. Vorrichtung nach Anspruch 19, dadurch gekennzeichnet, dass die Ablage (16) eine Fördereinrichtung zum Fördern des Artikels aufweist.

23. Vorrichtung nach Anspruch 22, dadurch gekennzeichnet, dass die Fördereinrichtung ein Förderband ist.

24. Vorrichtung nach einem der Ansprüche 7 bis 23, dadurch gekennzeichnet, dass die Aufnahmen (8) und die Aufnahmefächer (3) an einem gemeinsamen Gestell (9) gehaltert sind, welches obere und/oder untere Führungsstreben (17) o.dgl. umfasst, im Bereich welcher die Greifereinrichtung (11) verfahrbar gehaltert ist.

25. Vorrichtung nach einem der Ansprüche 7 bis 24, dadurch gekennzeichnet, dass der Kommissionierautomat (2) zwei einander gegenüberstehende Reihen mit Aufnahmefächern (3) aufweist, zwischen denen eine im wesentlichen horizontal laufende Fördereinrichtung (5) angeordnet ist, auf welche die am Kommissionierautomaten (2) zu kommissionierenden Artikel (6) abgebbar sind, wobei jeder Reihe an Aufnahmefächern (3) eine Reihe an Aufnahmen (8) und wenigstens eine Greifereinrichtung (11) zugeordnet ist.

26. Vorrichtung nach einem der Ansprüche 7 bis 25, dadurch gekennzeichnet, dass jede Aufnahme zum Aufnehmen wenigstens zweier separater, hintereinander einlagerbarer Artikelstapel ausgebildet ist, wobei der hintere Stapel im Bedarfsfall manuell oder mittels eines automatischen Verschiebemittels in den Arbeitsbereich der Greifereinrichtung verschiebbar ist.
